# EUROPEAN PATENT APPLICATION

(11) **EP 2 375 414 A1**
(43) Date of publication of application: **12.10.2011**
(21) Application number: 09833231.5
(22) Date of filing: 18.12.2009
(51) Int. Cl.: G11B 17/028

(54) **DISK DEVICE**

(30) Priority: 18.12.2008 JP 2008322150
(71) Applicant: Panasonic Corporation, Kadoma-shi Osaka 571-8501 (JP)
(72) Inventor: OKUBO, Tetsuya, Osaka-shi Osaka 540-6207 (JP); HONDA, Kazuyuki, Osaka-shi Osaka 540-6207 (JP); OHMURA, Yoshikazu, Osaka-shi Osaka 540-6207 (JP); URUSHIHARA, Kenji, Osaka-shi Osaka 540-6207 (JP); NISHIKATA, Tomomi, Osaka-shi Osaka 540-6207 (JP)
(74) Representative: Grünecker, Kinkeldey, Stockmair & Schwanhäusser Anwaltssozietät
(86) International application number: PCT/JP2009/007019
(87) International publication number: WO 2010/070924

(57) **Abstract**

A disk device, wherein a disk clamp unit is further thinned. The disk device is provided with a spindle motor (300) for positioning and rotating a disk, an alignment ring (301) fixed to the rotating shaft of the spindle motor, and a clamp section (400) for mounting the disk on the spindle motor (300). The alignment ring (301) is provided with a projection section (301C) formed around the rotating shaft of the spindle motor (300), and a magnet (302) provided around the rotating shaft with a space provided between the magnet (302) and the projection section (301C). The clamp section (400) is provided with a center member (401) having formed therein a recessed space (401G) in which the projection section (301C) is fitted, and also with a member (402) to be attracted which is attracted by the magnet (302). The clamp section (400) is adapted in such a manner that the disk is mounted on the spindle motor (300) when the projection section (301C) is fitted in the recessed space (401 G) and attracted by the magnet (302).

## Description

### Technical Field

The present invention relates to a disk apparatus that incorporates and rotates a disk.

### Background Art

There is known as a conventional disk apparatus a disk clamp unit that utilizes magnetic force of a magnet and that is fixed coaxially and removably to a rotating shaft of a spindle motor that rotates a disk (see patent literature 1, for example).

In a conventional disk clamp unit, a laminate comprising a hollow, flat permanent magnet and yoke is fixed inside a recess provided on a side opposite a clamper of a disk chuck section. This permanent magnet is positioned by means of a step section inside the recess.

### Citation List

### Patent Literature

PTL 1
   Japanese Patent Application Laid-Open No. 2003-228900

### Summary of Invention

### Technical Problem

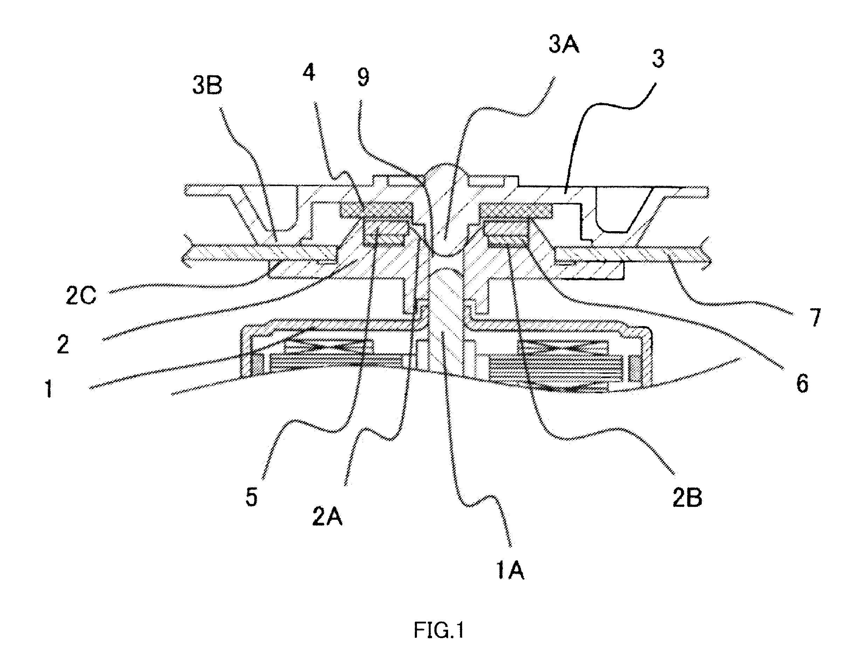

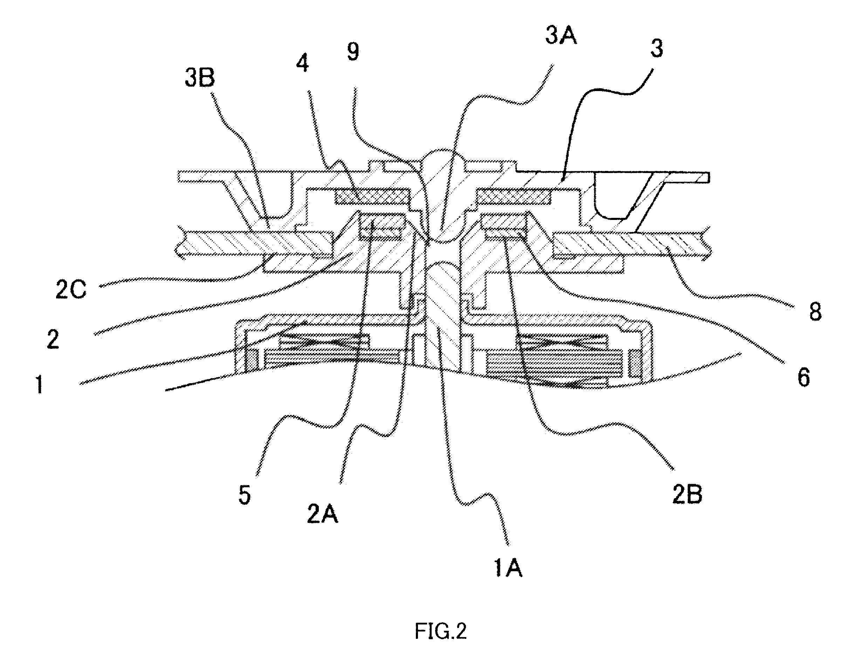

However, as shown in FIG.1 and FIG.2, it is difficult to make a conventional disk clamp unit thinner due to the presence of a centering section of clamp 3 placed in the extension direction of rotating shaft 1A of spindle motor 1. Also, there is variation in the thickness of disks 7 and 8 held under pressure by disk table 2 and clamp 3. Furthermore, due to this variation, the relative positions of disk table 2 and clamp 3 become nearer or further apart, and clearance 9 between disk table 2 and clamp 3 in the centering section of clamp 3 is not constant. Therefore, there is a problem of the precision of the centering position of clamp 3 with respect to 2 decreasing, and noise being generated or playback performance decreasing when disk playback or recording is performed.

It is therefore an object of the present invention to provide a disk apparatus that enables further thinning of a disk clamp unit.

### Solution to Problem

A disk apparatus of the present invention is provided with a spindle motor that positions and rotates a disk, an alignment ring that is fixed to a rotating shaft of the spindle motor, and a clamp section that mounts the disk on the spindle motor; wherein the alignment ring has a projecting section formed around the rotating shaft of the spindle motor, and a magnetic attraction section provided around the rotating shaft of the spindle motor with a space provided between the magnetic attraction section and the projecting section; and the clamp section has a center member having formed therein a recessed space into which the projecting section is fitted, and a member to be attracted that is attracted by the magnetic attraction section, and mounts the disk on the spindle motor by means of fitting of the projecting section into the recessed space and attraction by the magnetic attraction section.

By means of this configuration, a disk apparatus of the present invention enables a disk to be clamped by having a clamp section positioned in an alignment ring and having the clamp section attracted toward a disk rotation section by a magnetic attraction section.

Also, a disk apparatus of the present invention makes possible a clamp section centering configuration that suppresses thickness since a projecting section provided so as to be positioned around a rotating shaft of a spindle motor in an alignment ring fits into a recessed space formed by an annular projecting section of the clamp section.

Also, in a disk apparatus of the present invention, the center member has a groove-shaped section, the member to be attracted has an engaging projecting section capable of engaging in the groove-shaped section, and the clamp section has a configuration in which the center member and the member to be attracted are combined by means of engagement of the groove-shaped section and the engaging projecting section.

By means of this configuration, a disk apparatus of the present invention enables incorporation of a clamp section to be performed by means of a simple operation of fitting an engaging projecting section formed on a section to be attracted in a groove shape.

Also, a disk apparatus of the present invention is further provided with a clamp guide that holds the clamp section so as to be able to be moved toward or away from the spindle motor; wherein the clamp section has a curved-surface raised section that rotates in accordance with rotation of the spindle motor and comes into contact with the clamp guide at the center of that rotation, and a groove provided around the curved-surface raised section.

By means of this configuration, even if a lubricant such as grease applied to the surface of the curved-surface raised section surface flows out toward the periphery of the curved-surface raised section during disk rotation, a disk apparatus of the present invention can keep the lubricant inside a recess provided around the raised section, and prevent the lubricant from adhering to the clamped disk.

### Advantageous Effects of Invention

In a disk apparatus of the present invention, a projecting section formed on a spindle motor rotating shaft and alignment ring fits into a recessed space formed in a center member of a clamp section. By this means, the clamp section centering configuration can be made thin, and a disk apparatus can be provided in which further thinning of the disk clamp unit is made possible.

### Brief Description of Drawings

FIG.1 is a frontal cross-sectional view of a conventional disk clamp unit;
FIG.2 is a frontal cross-sectional view of a conventional disk clamp unit;
FIG.3 is an overall perspective view of a car audio apparatus as an electronic apparatus in an embodiment of the present invention;
FIG.4 is a perspective view of the principal parts of a disk apparatus according to this embodiment;
FIG.5 is a first arrow-direction cross-sectional view of the principal parts of a disk clamp unit according to this embodiment;
FIG.6 is a second arrow-direction cross-sectional view of the principal parts of a disk clamp unit according to this embodiment;
FIG.7 is a first enlarged view of the principal parts of a disk clamp unit according to this embodiment;
FIG.8 is a third arrow-direction cross-sectional view of the principal parts of a disk clamp unit according to this embodiment;
FIG.9 is a second enlarged view of the principal parts of a disk clamp unit according to this embodiment;
FIG.10 is a drawing showing a plan view and cross-sectional view of a clamp section in this embodiment;
FIG.11 is a drawing showing a plan view and right side view of a center member in this embodiment;
FIG.12 is a drawing showing a plan view and cross-sectional view of a member to be attracted in this embodiment;
FIG.13 is an exploded perspective view of a clamp section in this embodiment before assembly;
FIG.14 is a perspective view of a clamp section in this embodiment after assembly;
FIG.15 is a drawing showing assembly phase diagrams of a member to be attracted with respect to a center member in this embodiment;
FIG.16 is a drawing showing a plan view and cross-sectional view of a guide configuration of a clamp section in this embodiment;
FIG.17 is a drawing showing a plan view and left side view of a clamp unit in this embodiment; and
FIG.18 is a drawing showing a plan view and left side view of a clamp unit in this embodiment.

### Description of Embodiments

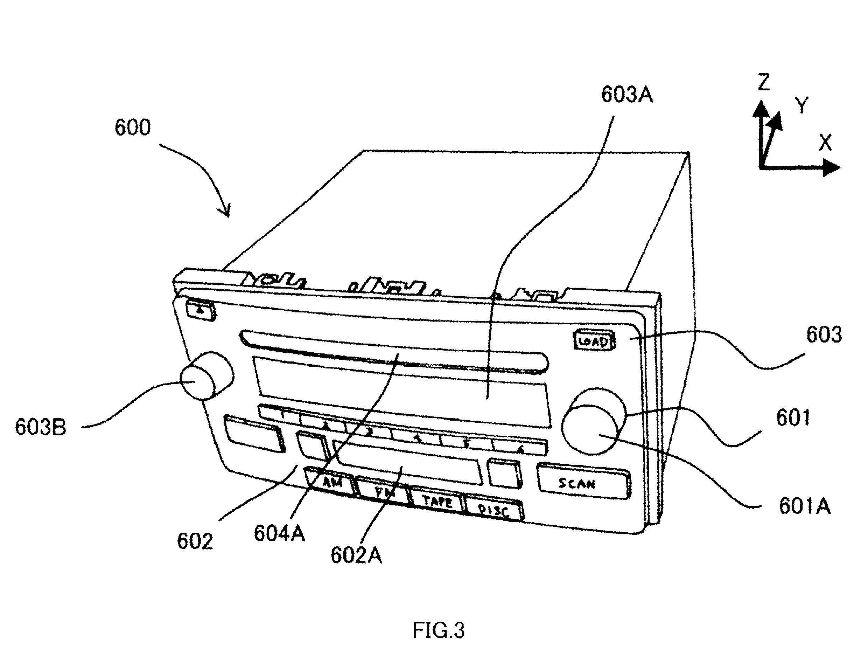

Now, an embodiment of the present invention will be described using FIG.3 through FIG.18.

In this embodiment, based on an actual usage state of a disk apparatus, a surface in which there is a disk insertion aperture is defined as the front surface, the horizontal direction as the X direction (taking the right direction as the forward direction), the depth direction as the Y direction (taking the depth direction as the forward direction), and the thickness direction as the Z direction (taking the upper surface direction as the forward direction).

FIG.3 is an overall perspective view of car audio apparatus 600 as an electronic apparatus incorporating a disk apparatus according to the present embodiment.

This car audio apparatus 600 incorporates radio 601, cassette tape player 602, and so forth, in addition to a disk apparatus. Front panel 603 of car audio apparatus 600 has display section 603A and power/volume knob 603B used for all functions, disk insertion/ejection aperture 604A for the disk apparatus, radio tuning knob 601A, cassette tape insertion/ejection aperture 602A, and so forth. Inside, car audio apparatus 600 has a control section (not shown) that controls the radio, cassette tape player, disk apparatus, and so forth.

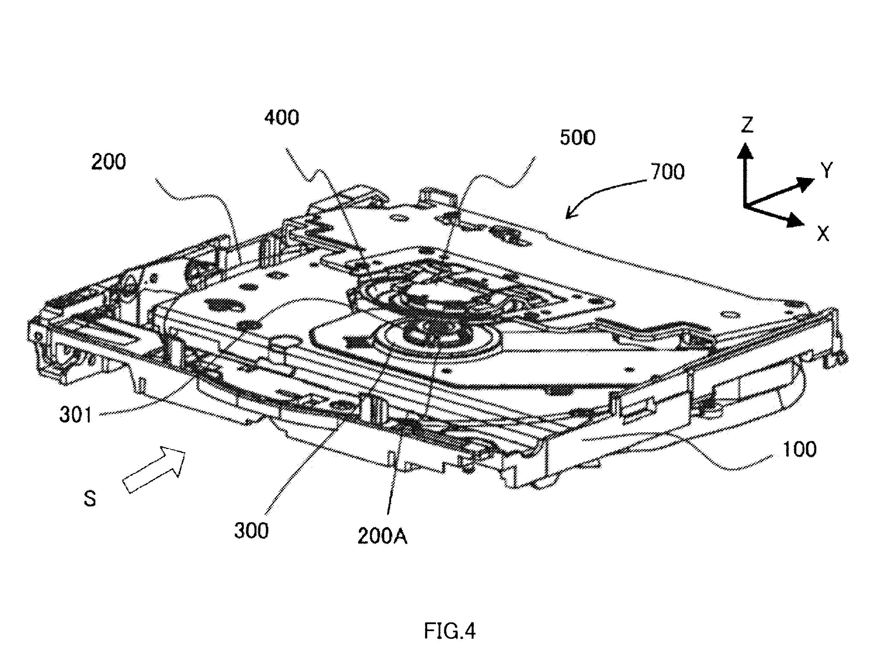

FIG.4 is an overall perspective view of the principal parts of disk clamp unit 700, which constitutes the main portion of a disk apparatus according to this embodiment.

Disk clamp unit 700 is installed on base chassis 100, and is provided with spindle motor 300, alignment ring 301, clamp section 400, and clamp guide 500.

Spindle motor 300 has disk 200 mounted thereon, and rotates mounted disk 200. Alignment ring 301 is fixed to the rotating shaft of spindle motor 300, and guides center hole 200A of disk 200 when disk 200 is mounted on spindle motor 300. More specifically, alignment ring 301 guides center hole 200A so that a virtual axis passing through the center of center hole 200A of disk 200, and the rotating shaft of spindle motor 300, are coaxial. Clamp section 400 clamps disk 200 between clamp section 400 and spindle motor 300 when disk 200 rotates. Clamp guide 500 holds clamp section 400, moving clamp section 400 toward or away from spindle motor 300. In FIG.4, only the outer edge of disk 200 is shown, with the inner part shown as transparent to allow the parts installed underneath to be seen. Also, in FIG.4, clamp section 400 is shown in its state before clamping disk 200.

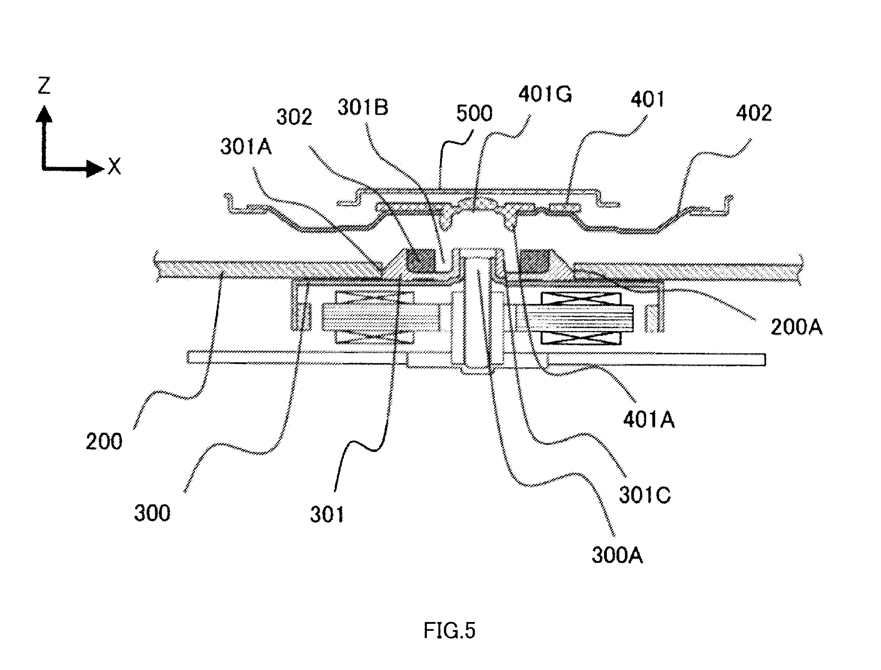

Next, the configuration of spindle motor 300 and clamp section 400 will be described using FIG.5 through FIG.9, which show cross-sections of spindle motor 300 and clamp section 400 when viewed from the S direction shown in FIG.4.

FIG.5 is an arrow-direction cross-sectional view of the principal parts of disk clamp unit 700 according to this embodiment when viewed from the S direction in FIG.4. FIG.5 shows a cross-sectional view of disk clamp unit 700 in a state in which disk 200 has been mounted on spindle motor 300, and in a state before disk 200 is clamped between spindle motor 300 and clamp section 400.

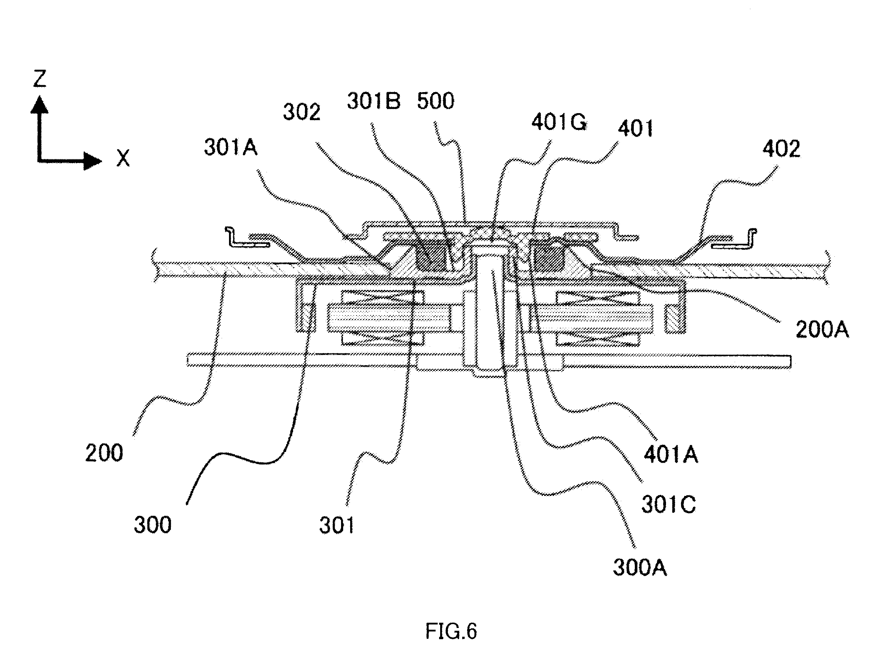

FIG.6 is an arrow-direction cross-sectional view of the principal parts of disk clamp unit 700 according to this embodiment when viewed from the S direction in FIG.4, showing a state in which disk 200 is clamped between spindle motor 300 and clamp section 400. Aforementioned disk 200 is a thin disk (thickness t being 1.1 mm).

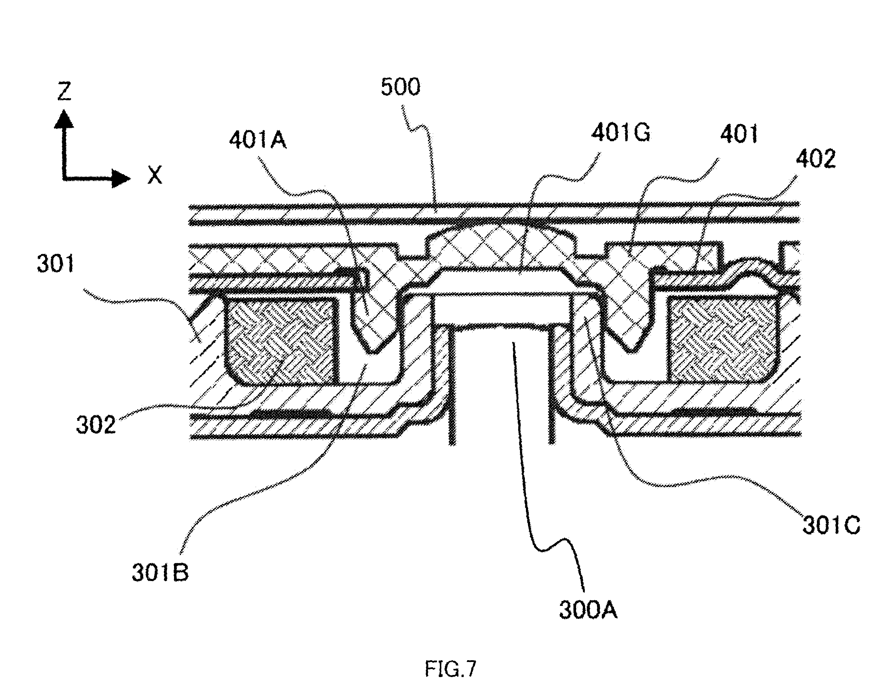

FIG.7 is an enlarged view of the principal parts of disk clamp unit 700 shown in FIG.6 according to this embodiment.

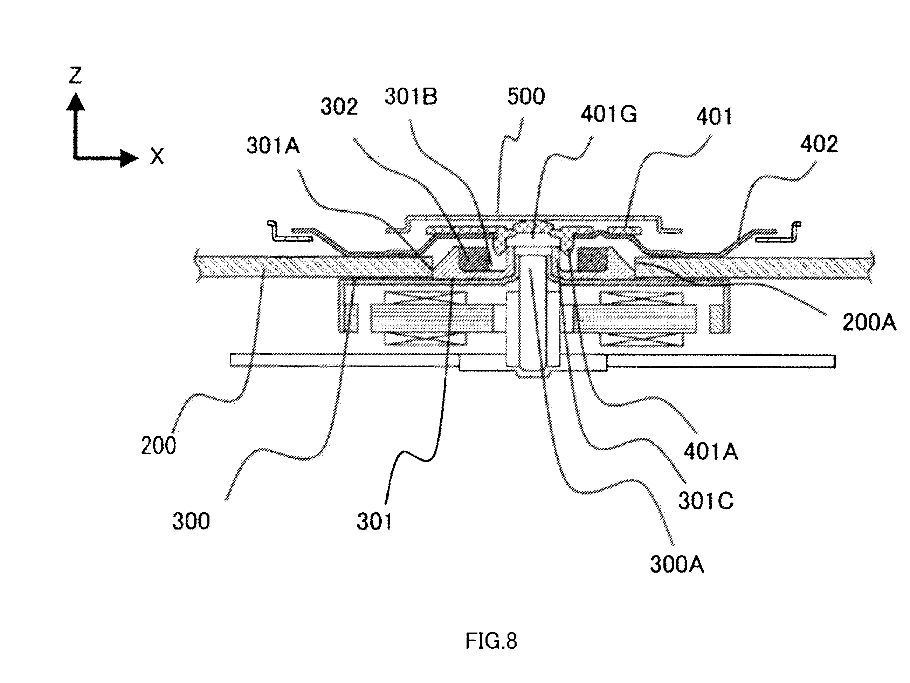

FIG.8 is an arrow-direction cross-sectional view of the principal parts of disk clamp unit 700 according to this embodiment when viewed from the S direction in FIG.4, showing a state in which disk 200 has been clamped between spindle motor 300 and clamp section 400. Disk 200 is a thick disk (with thickness t = 1.5 mm, for example).

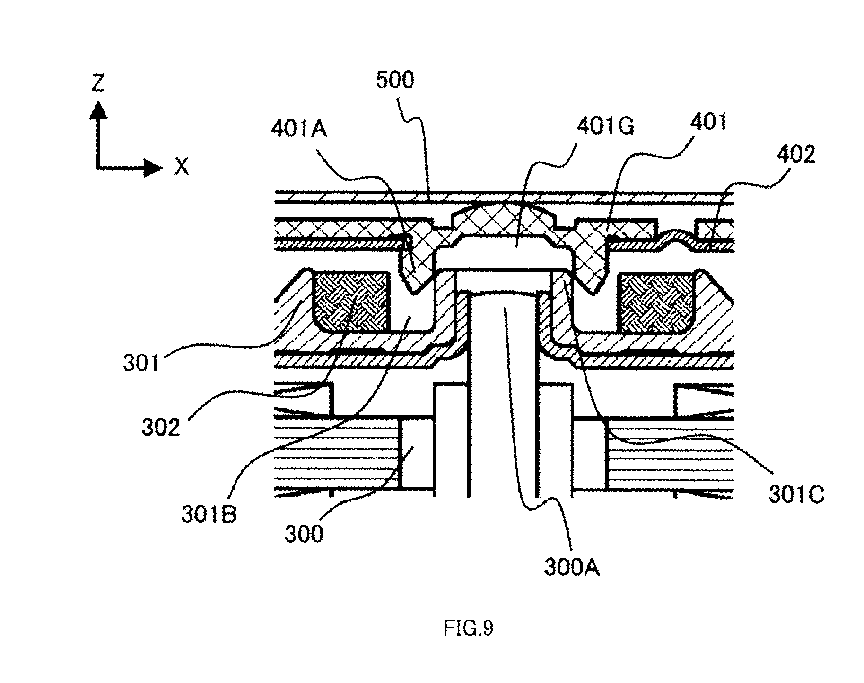

FIG.9 is an enlarged view of the clamp unit principal parts shown in FIG.8 according to this embodiment.

Positional regulation of disk 200 will now be described.

Disk 200 mounted on spindle motor 300 has its movement in the X direction and in the Y direction restricted by disk guide surface 301A of alignment ring 301, and is restricted to a position in which it becomes coaxial with the rotating shaft of spindle motor 300. By being clamped between spindle motor 300 and clamp section 400, disk 200 mounted on spindle motor 300 has its movement in the Z direction with respect to spindle motor 300 restricted. That is to say, disk 200 is mounted on spindle motor 300 by clamp section 400.

Alignment ring 301 has space 301B capable of accommodating magnet 302. Also, alignment ring 301 has annular magnet 302, fixed to a surface forming 301B, inside this 301 B. Magnet 302 is a magnetic attraction section that magnetically attracts clamp section 400. Magnet 302 may be placed around the rotating shaft of spindle motor 300, or a mode may be used in which alignment ring 301 is placed outward of magnet 302, for example.

Clamp section 400 has a configuration in which center member 401 and member to be attracted 402 are combined. Member to be attracted 402 is made of a material having physical properties enabling magnetic attraction (such as iron), and is magnetically attracted in the negative direction of the Z direction by the magnetic attractive force of magnet 302. As a result, clamp section 400 clamps disk 200 between clamp section 400 and spindle motor 300. Center member 401 is stacked on member to be attracted 402, and annular projecting section 401 A is formed on center member 401. Annular projecting section 401A passes through a hole formed in the center part of member to be attracted 402, and projects from the lower surface of member to be attracted 402.

Centering of clamp section 400 with respect to spindle motor 300 will now be described.

Recessed space 401G is formed in annular projecting section 401A formed on center member 401 of clamp section 400. Annular projecting section 401A is made annular in shape by this recessed space 401G. Alignment ring 301 is fixed to rotating shaft 300A of spindle motor 300, and ring-shaped projecting section 301C is formed around rotating shaft 300A on alignment ring 301. When disk clamping is performed, projecting section 301C of alignment ring 301 fits into recessed space 401 G formed in annular projecting section 401A of center member 401 of clamp section 400. By this means, clamp section 400 has its movement in the X direction and Y direction with respect to spindle motor 300 restricted, and is centered with respect to spindle motor 300.

Also, as shown in FIG.6 through FIG.9, recessed space 401G formed in annular projecting section 401A of center member 401 is formed in such a way that projecting section 301C of alignment ring 301 is able to fit telescopically. Consequently, even when disk 200 is clamped between spindle motor 300 and clamp section 400, annular projecting section 401A of center member 401 and projecting section 301C of alignment ring 301 are fitted together telescopically. This fitting does not depend on whether disk 200 is a thin disk or a thick disk. That is to say, disk clamp unit 700 can maintain the centering precision of clamp section 400 with respect to spindle motor 300 at a high level even in the case of variations in the thickness of disk 200.

Also, as shown in FIG.6 through FIG.9, rotating shaft 300A of spindle motor 300 and projecting section 301C of alignment ring 301 fit inside recessed space 401G of clamp section 400. By this means, thinning of clamp section 400 and the centering configuration for clamp section 400 is made possible, and thinning of disk clamp unit 700 and various apparatuses incorporated therein is made possible.

Also, in this embodiment, member to be attracted 402 is placed at the bottom of the center member 401 laminate. By this means, the relative distance of member to be attracted 402 subjected to the magnetic attractive force of magnet 302 can be shortened to a position at which contact with magnet 302 is possible. Therefore, magnetic attractive force exerted by magnet 302 can be maximized, and the disk 200 holding performance of magnet 302 can be improved.

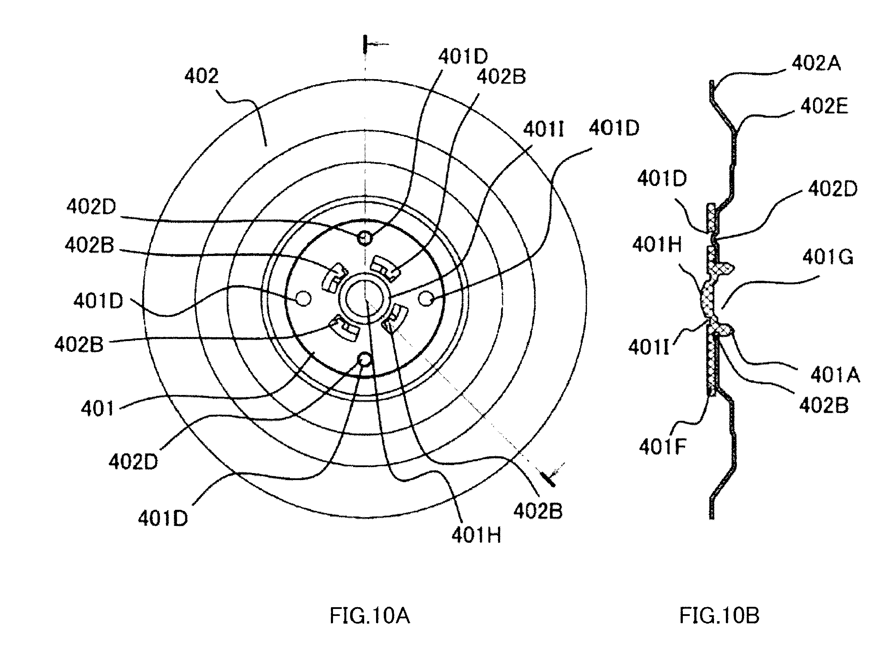

Next, the configuration of clamp section 400 will be described using FIG.10 through FIG.15.

FIG.10 is a drawing showing a plan view and cross-sectional view of clamp section 400 in this embodiment. FIG.10A is a plan view of clamp section 400 in this embodiment, and FIG. 10B is a cross-sectional view of clamp section 400 in this embodiment.

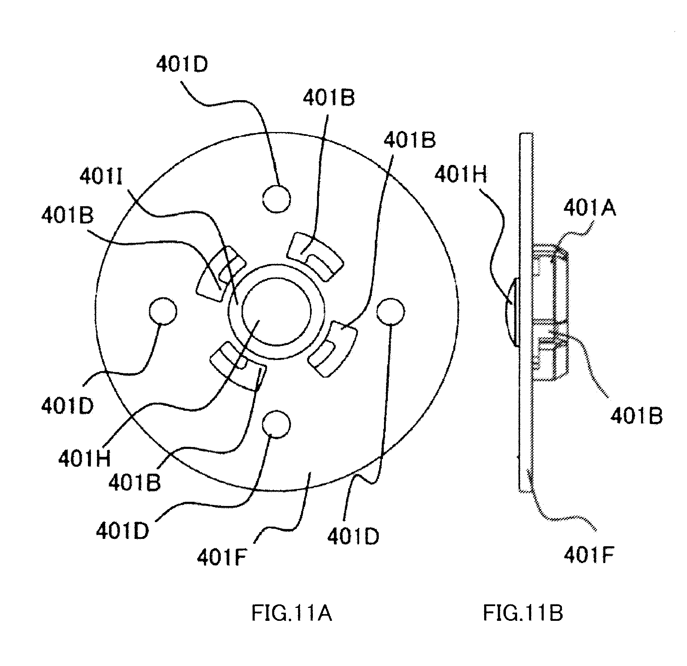

FIG.11 is a drawing showing a plan view and right side view of center member 401 of clamp section 400 in this embodiment. FIG.11A is a plan view of center member 401 of clamp section 400 in this embodiment, and FIG.11B is a right side view of center member 401 of clamp section 400 in this embodiment.

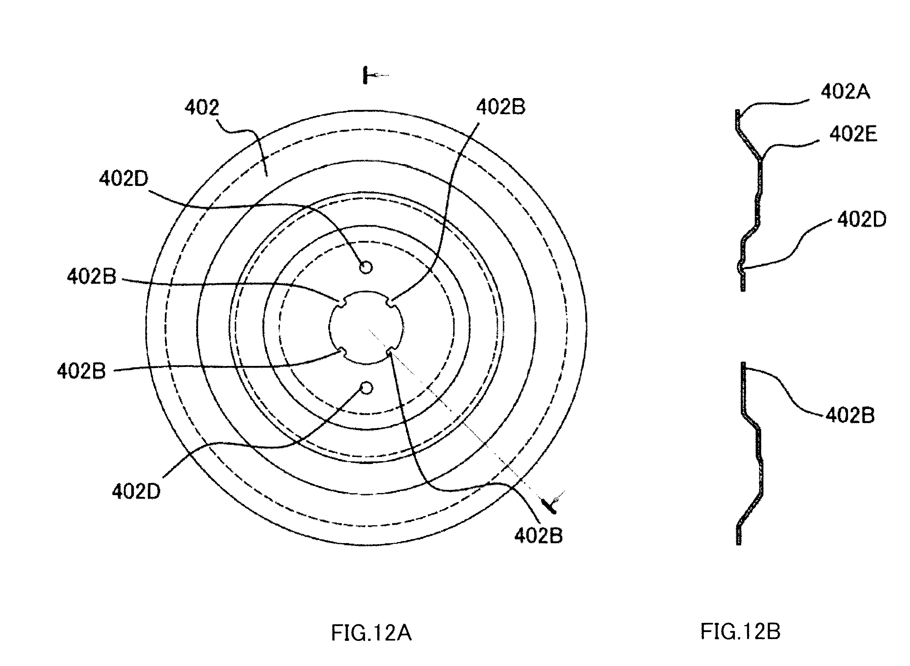

FIG.12 is a drawing showing a plan view and cross-sectional view of member to be attracted 402 of clamp section 400 in this embodiment. FIG.12A is a plan view of member to be attracted 402 of clamp section 400 in this embodiment, and FIG.12B is a cross-sectional view of member to be attracted 402 of clamp section 400 in this embodiment.

Projecting section 301C of alignment ring 301 fits into recessed space 401G formed in annular projecting section 401A of center member 401. Consequently, considering the securement of mutual slidability with respect to alignment ring 301 and the prevention of damage to center member 401 and alignment ring 301, it is desirable to use a resin material for center member 401. On the other hand, it is also possible to form center member 401 using a metallic material. Member to be attracted 402 is made of a material having physical properties enabling magnetic attraction by magnet 302 (such as iron).

As shown in FIG.11A and FIG.11B, center member 401 is of a form in which disk-shaped section 401F and annular projecting section 401A are made integral. Four identically shaped groove-shaped sections 401B are formed on a side surface of annular projecting section 401A. Groove-shaped section 401B has space T formed by the lower surface of disk-shaped section 401F and a peripheral-direction groove end face of groove-shaped section 401B. On disk-shaped section 401F, four identically shaped circular holes 401D are formed at positions separated by 90 degrees. In the center of disk-shaped section 401F, dome-shaped curved-surface raised section 401 H is formed on the opposite surface to the surface on which annular projecting section 401A is placed. Annular groove 401I is formed around curved-surface raised section 401H.

Clamp guide 500 shown in FIG.4 through FIG.9 is in contact with curved-surface raised section 401H during rotation of disk 200. A lubricant such as grease is applied to this contact section of curved-surface raised section 401H. Therefore, the grease applied to curved-surface raised section 401H may flow outward in the peripheral direction due to the rotation of disk 200. In this case, the grease is kept inside groove 401I, and can be prevented from scattering outward or adhering to the disk.

As shown in FIG.12A and FIG.12B, member to be attracted 402 is disk-shaped. Brim section 402A is formed on the outer periphery of member to be attracted 402. On the inner periphery side of member to be attracted 402, disk contact section 402E that comes into contact with disk 200 when disk 200 is clamped, is formed. In the center of member to be attracted 402, a surface having a hole is formed. On this surface in the center of member to be attracted 402 are formed four identically shaped projecting sections 402B facing toward the center of member to be attracted 402. On the external peripheral direction side of the center hole, two dome-shaped engaging projecting sections 402D are formed such that the center hole is placed between them.

The procedure for assembling center member 401 and member to be attracted 402 of clamp section 400 will now be described.

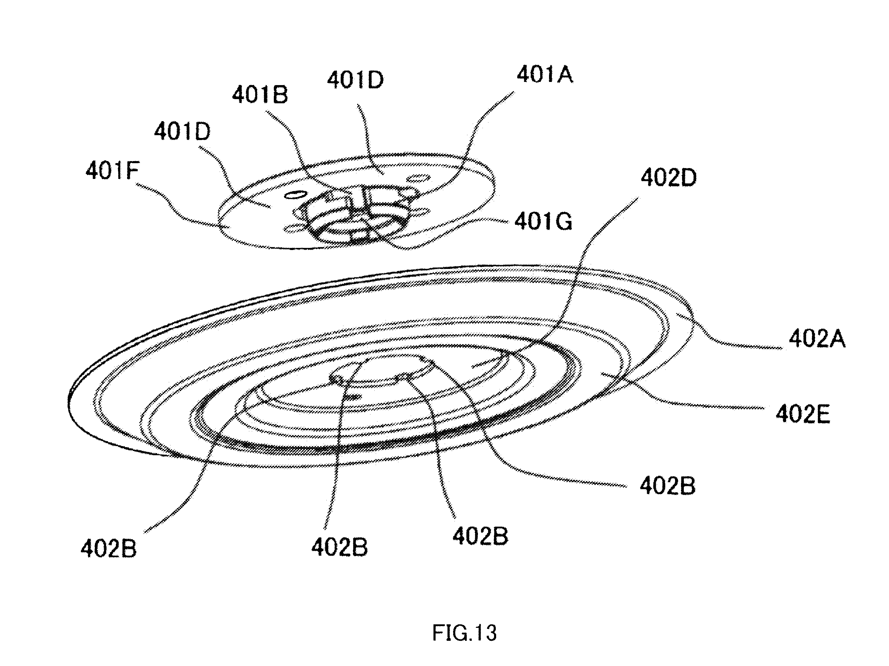

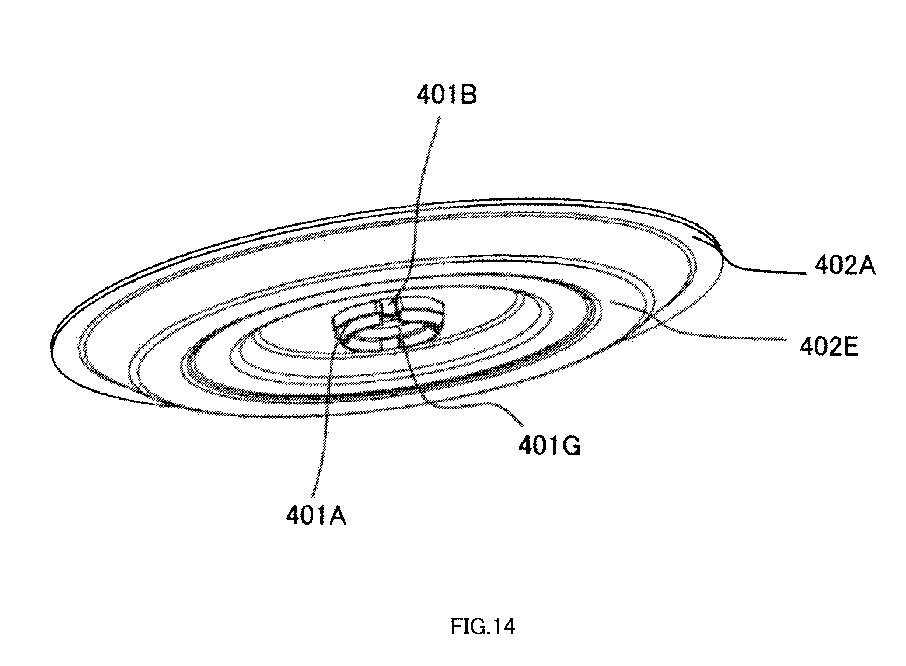

FIG.13 is an exploded perspective view of clamp section 400 in this embodiment before assembly, and FIG.14 is a perspective view of clamp section 400 in this embodiment after assembly.

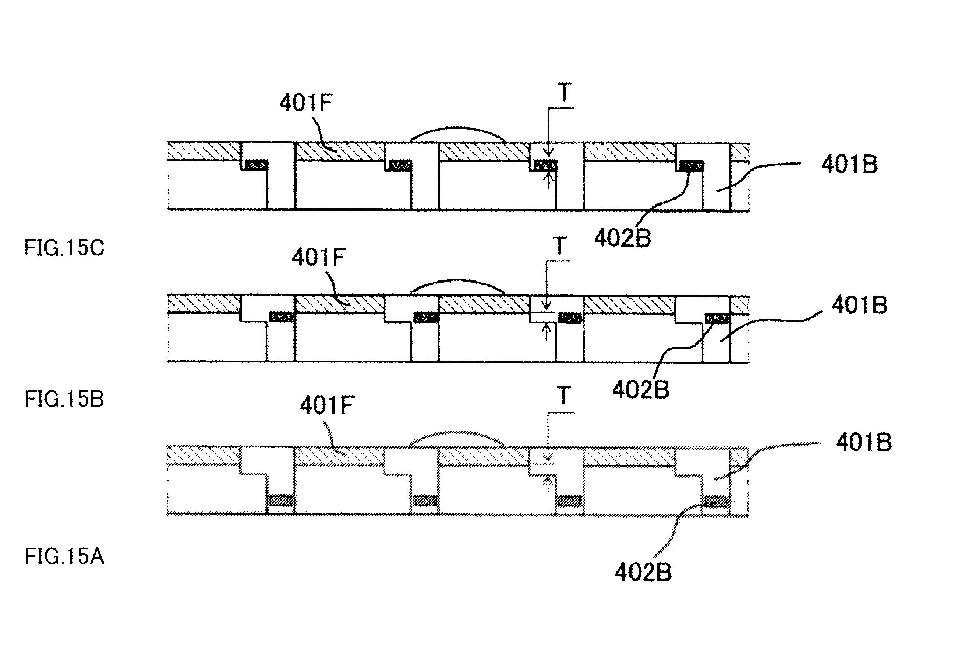

FIG.15 is a drawing showing assembly phase diagrams of member to be attracted 402 with respect to center member 401 in clamp section 400 of this embodiment. FIG.15A through FIG.15C show assembly of member to be attracted 402 with respect to center member 401 in the following three sequential stages: initial assembly state, intermediate assembly state, and assembled state. More specifically, FIG.15A through FIG.15C show surface development diagrams of a side surface of annular projecting section 401A of center member 401, and furthermore show positional changes of projecting sections 402B of member to be attracted 402. As explained above, projecting section 402B is a member that fits into groove-shaped section 401B formed in center member 401.

The procedure for assembling center member 401 and member to be attracted 402 is as follows. First, a state (the state shown in FIG.15A) is established in which projecting sections 402B of member to be attracted 402 are fitted into groove-shaped sections 401B of center member 401 so that annular projecting section 401A of center member 401 projects from the center hole of member to be attracted 402. Then a state (the state shown in FIG.15B) is established in which member to be attracted 402 has been moved to a position in which member to be attracted 402 is in contact with disk-shaped section 401F of center member 401. Then a state (the state shown in FIG.15C) is established in which member to be attracted 402 has been rotated in a direction in which projecting sections 402B of member to be attracted 402 fit into spaces T of center member 401. At this time, a state is established in which engaging projecting sections 402D of member to be attracted 402 are engaged in two of the four holes 401D formed in center member 401. Assembly is thereby completed.

Thus, assembly of center member 401 and member to be attracted 402 for clamp section 400 having the above-described configuration is simple. Also, in clamp section 400 having the above-described configuration, engaging projecting sections 402D of member to be attracted 402 fit into circular holes 401D formed in center member 401. By this means, clamp section 400 enables the possibility of assembly of member to be attracted 402 with respect to center member 401 failing due to vibration, shock, or suchlike disturbances to be reduced.

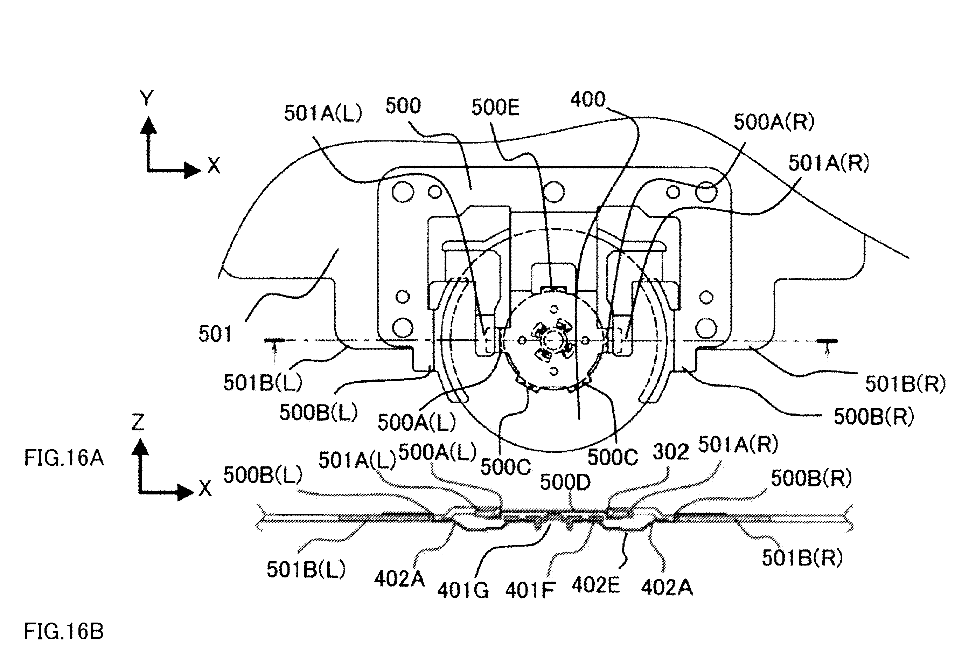

Next, a configuration for moving clamp section 400 toward or away from spindle motor 300 (hereinafter referred to as a "guide configuration") will be described using FIG.16 through FIG.18.

FIG.16 is a drawing showing a plan view and cross-sectional view of a guide configuration of clamp section 400 in this embodiment. FIG.16A is a plan view of the guide configuration of clamp section 400 in this embodiment, and FIG.16B is a cross-sectional view of the guide configuration of clamp section 400 in this embodiment.

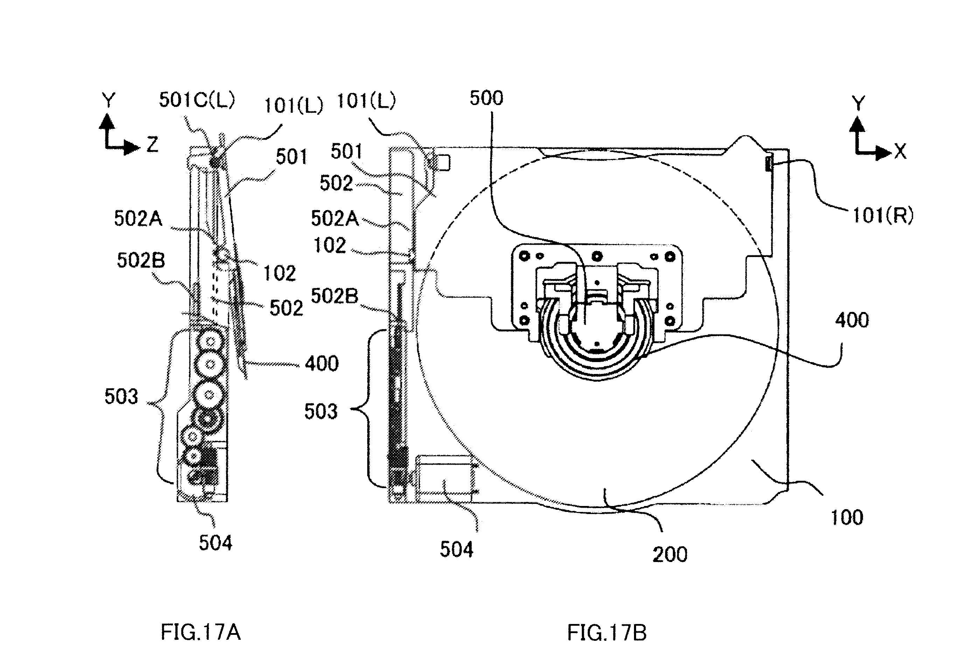

FIG.17 is a drawing showing a plan view and left side view of disk clamp unit 700 in this embodiment. FIG.17A is a plan view of disk clamp unit 700 in this embodiment, and FIG.17B is a left side view of disk clamp unit 700 in this embodiment. FIG.17A and FIG.17B show a state before disk 200 is clamped.

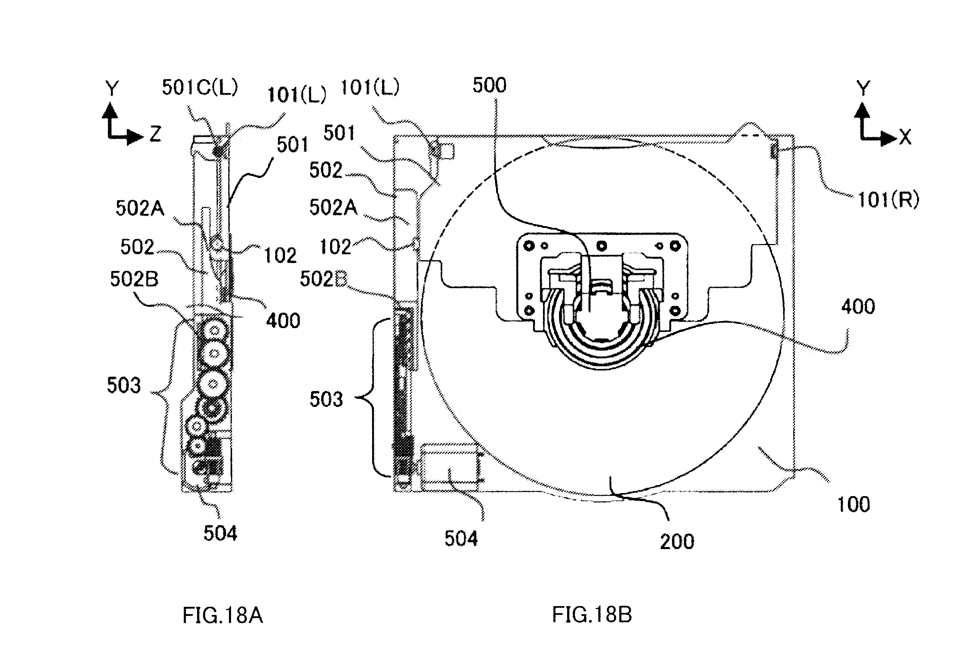

FIG.18 is a drawing showing a plan view and left side view of disk clamp unit 700 in this embodiment. FIG.18A is a plan view of disk clamp unit 700 in this embodiment, and FIG.18B is a left side view of disk clamp unit 700 in this embodiment. FIG.18A and FIG.18B show a state in which disk 200 has been clamped.

In FIG.17 and FIG.18, base chassis 100 and slider 502 referred to in the description of the operation and configuration of clamp guide 500 are shown in outline only.

Fulcrum shaft 101 (L) and fulcrum shaft 101 (R) are provided on base chassis 100. Clamp arm 501 is an arm that is supported pivotably by fulcrum shaft 101 (L) and fulcrum shaft 101 (R) of base chassis 100, and that has clamp guide 500 fixed to it by swaging. Clamp guide 500 is configured and placed in such a way as to confine the peripheral edge of clamp section 400.

Bent section 501A (L) and bent section 501A (R) are formed and placed on clamp arm 501 so as to be bilaterally symmetrical with respect to clamp section 400. Also, bent section 500A (L) and bent section 500A (R) are formed on clamp guide 500. Movement of clamp arm 501 in the forward direction of the Z direction is restricted by stacked placement of bent section 501A (L) and bent section 501A (R) above this bent section 500A (L) and bent section 500A (R).

Receiving section 501B (L) and receiving section 501B (R) are formed and placed on clamp arm 501 so as to be bilaterally symmetrical with respect to clamp section 400. Also, circular-arc-shaped bent section 500B (L) and circular-arc-shaped bent section 500B (R) are formed on clamp guide 500. Movement of clamp arm 501 in the negative direction of the Z direction is restricted by stacked placement of receiving sections 501 B below this circular-arc-shaped bent section 500B (L) and circular-arc-shaped bent section 500B (R).

On the right and left of clamp arm 501 a side surface curve is formed that extends in the base chassis 100 direction. Hole 501C (L) is provided in the left-hand side surface curve, and hole 501C (R) is provided in the right-hand side surface curve (neither of which is shown). Fulcrum shaft 101 (L) and fulcrum shaft 101 (R) provided on base chassis 100 fit into hole 501C (L) and hole 501C (R) respectively, and are supported pivotably. Shaft 102 is installed in a fixed manner on one of the side surface curves of clamp arm 501. Shaft 102 is in contact with cam surface 502A of slider 502.

Surface 500D is formed on clamp guide 500 at a position above clamp section 400. Bent sections 500A, bent sections 500C, and bent section 500E are formed on surface 500D at positions corresponding to the outer periphery of center member 401 of clamp section 400. Movement of clamp section 400 in the XY plane direction is restricted by the outside of approximately disk-shaped section 401F of center member 401 being in contact with bent sections 500A, bent sections 500C, and bent section 500E.

Circular-arc-shaped bent section 500B (L) and circular-arc-shaped bent section 500B (R) are formed and placed on clamp guide 500 so as to be bilaterally symmetrical with respect to clamp section 400. Also, circular-arc-shaped bent sections 500B are placed below brim section 402A of member to be attracted 402 of clamp section 400, in contact with brim section 402A. Therefore, movement of clamp section 400 in the Z direction is restricted by surface 500D on the upper side, and is restricted by circular-arc-shaped bent sections 500B on the lower side.

By means of the above-described configuration, clamp section 400 is positionally confined by clamp guide 500. By this means, separation of clamp section 400 from clamp guide 500 due to a shock or suchlike disturbance can be prevented while stably maintaining a clearance between clamp section 400 and clamp guide 500.

Slider 502, motor 504 that is the slider 502 drive source, and gear train 503, are installed on base chassis 100. The driving force of motor 504 is transmitted to rack section 502B of slider 502 via gear train 503. That is to say, slider 502 and gear train 503 have a configuration enabling slider 502 to move in the Y direction through forward/reverse rotation of motor 504.

When disk clamp unit 700 attempts to move clamp section 400 toward spindle motor 300, slider 502 is moved in the negative direction of the Y direction by motor 504 drive. At this time, shaft 102 in contact with cam surface 502A of slider 502 moves along cam surface 502A in the negative direction of the Z direction, and clamp arm 501 pivots with fulcrum shafts 101 as spindles. As a result, clamp guide 500 and clamp section 400 move toward spindle motor 300.

Conversely, when disk clamp unit 700 attempts to move clamp section 400 away from spindle motor 300, slider 502 is moved in the forward direction of the Y direction by reverse drive of motor 504. At this time, shaft 102 in contact with cam surface 502A of slider 502 moves along cam surface 502A in the forward direction of the Z direction, and clamp arm 501 pivots with fulcrum shafts 101 as spindles. As a result, clamp guide 500 and clamp section 400 move away from spindle motor 300.

By means of the above operations, disk 200 mounted on spindle motor 300 is clamped between spindle motor 300 and clamp section 400.

In the above-described embodiment, a configuration whereby clamp section 400 is moved in the Z direction by movement of slider 502 provided on base chassis 100 has been described as a configuration that clamps disk 200, but the present invention is not limited to this. For example, disk 200 can also be clamped by means of a configuration whereby base chassis 100 is moved in the Z direction with respect to clamp section 400.

Also, a configuration has been assumed in which clamp arm 501 and clamp guide 500 are separate parts, but the present invention is not limited to this, and, for example, a so-called integral configuration may also be used for clamp arm 501 and clamp guide 500, whereby clamp arm 501 is given the function of clamp guide 500.

Thus, according to the present invention, rotating shaft 300A of spindle motor 300 and projecting section 301C of alignment ring 301 fit into recessed space 401G formed in annular projecting section 401A formed on center member 401 of clamp section 400. By this means, the present invention provides a disk apparatus that makes possible further thinning of clamp section 400 and a centering configuration for clamp section 400 (disk clamp unit).

The disclosure of Japanese Patent Application No.2008-322150, filed on December 18, 2008, including the specification, drawings and abstract, is incorporated herein by reference in its entirety.

### Industrial Applicability

As described above, a disk apparatus according to the present invention provides for a projecting section formed on a spindle motor rotation axis and alignment ring to be fitted into a recessed space formed by an annular projecting section of a clamp section, and therefore has an effect of making a clamp section centering configuration thin. That is to say, a disk apparatus according to the present invention is suitable for use as a disk apparatus that enables further thinning of a disk clamp unit to be achieved.

### Reference Signs List

100 Base chassis
200 Disk
300 Spindle motor
301 Alignment ring
302 Magnet
400 Clamp section
401 Center member
402 Member to be attracted
500 Clamp guide
501 Clamp arm
502 Slider
503 Gear train
504 Motor
600 Car audio apparatus
603 Front panel
700 Disk clamp unit

## Claims

1. A disk apparatus comprising:
a spindle motor that positions and rotates a disk;
an alignment ring that is fixed to a rotating shaft of the spindle motor; and
a clamp section that mounts the disk on the spindle motor, wherein:
the alignment ring has a projecting section formed around the rotating shaft of the spindle motor, and a magnetic attraction section provided around the rotating shaft of the spindle motor with a space provided between the magnetic attraction section and the projecting section; and
the clamp section has a center member having formed therein a recessed space into which the projecting section is fitted, and a member to be attracted that is attracted by the magnetic attraction section, and mounts the disk on the spindle motor by means of fitting of the projecting section into the recessed space and attraction by the magnetic attraction section.

2. The disk apparatus according to claim 1, wherein:
the center member has a groove-shaped section;
the member to be attracted has an engaging projecting section capable of engaging in the groove-shaped section; and
the clamp section has a configuration in which the center member and the member to be attracted are combined by means of engagement of the groove-shaped section and the engaging projecting section.

3. The disk apparatus according to claim 1, further comprising a clamp guide that holds the clamp section so as to be able to be moved toward or away from the spindle motor,
wherein the clamp section has a curved-surface raised section that rotates in accordance with rotation of the spindle motor and comes into contact with the clamp guide at the center of that rotation, and a groove provided around the curved-surface raised section.
